# Europäisches Patentamt

(19) **European Patent Office**

**Office européen des brevets**

(11) Publication number: **0 115 892**
**B1**

(12) **EUROPEAN PATENT SPECIFICATION**

(45) Date of publication of patent specification: **19.08.87**

(51) Int. Cl.⁴: **G 01 N 23/207**

(21) Application number: **84200132.3**

(22) Date of filing: **01.02.84**

(54) **X-ray examination apparatus having a double focusing crystal.**

(30) Priority: **04.02.83 NL 8300421**

(43) Date of publication of application:
**15.08.84 Bulletin 84/33**

(45) Publication of the grant of the patent:
**19.08.87 Bulletin 87/34**

(84) Designated Contracting States:
**CH DE FR GB LI NL**

(56) References cited:
**DE-A-3 103 322**
**GB-A-1 089 714**
**US-A-3 927 319**
**US-A-4 078 175**

**REVIEW OF SCIENTIFIC INSTRUMENTS, vol. 53, no. 2, February 1982, pages 131-141, New York, USA R.K. SMITHER et al.: "New method for focusing x rays and gamma rays"**

(73) Proprietor: **N.V. Philips' Gloeilampenfabrieken**
**Groenewoudseweg 1**
**NL-5621 BA Eindhoven (NL)**

(72) Inventor: **Brouwer, Geert**
**c/o INT. OCTROOIBUREAU B.V. Prof. Holstlaan 6**
**NL-5656 AA Eindhoven (NL)**
Inventor: **Huizing, Albert**
**c/o INT. OCTROOIBUREAU B.V. Prof. Holstlaan 6**
**NL-5656 AA Eindhoven (NL)**
Inventor: **Ondersteijn, Antonius Adrianus Maria**
**c/o INT. OCTROOIBUREAU B.V. Prof. Holstlaan 6**
**NL-5656 AA Eindhoven (NL)**
Inventor: **Thijssen, Josef Franz Karol**
**c/o INT. OCTROOIBUREAU B.V. Prof. Holstlaan 6**
**NL-5656 AA Eindhoven (NL)**
Inventor: **Viegers, Mathias Petrus Antonius**
**c/o INT. OCTROOIBUREAU B.V. Prof. Holstlaan 6**
**NL-5656 AA Eindhoven (NL)**

(74) Representative: **Scheele, Edial François et al**
**INTERNATIONAAL OCTROOIBUREAU B.V. Prof. Holstlaan 6**
**NL-5656 AA Eindhoven (NL)**

**Description**

The invention relates to a double focusing X-ray analysis crystal for monochromatization and focusing of X-ray radiation according to the preamble of claim 1.

Such an X-ray analysis crystal is known from British Patent Specification 1,089,714. An analysis crystal described therein is curved in two directions with different radii of curvature in order to obtain a double focusing. The process of bending a crystal into such a form is fairly difficult and in this process the crystal is liable to break or the curvature nevertheless deviates from the envisaged optimum curvature due to a later deformation. In fact, the crystal is constantly in a forced condition, as a result of which deformations are liable to occur during operation, for example, due to temperature variations or ageing phenomena. Further, it is of importance that the back surface of the crystal is not disturbed because irregularities therein may adversely affect the operation of the crystal as a monochromator.

The invention has for its object to obviate these disadvantages and therefore an X-ray analysis crystal of the kind mentioned in the opening paragraph is provided as defined by Claim 1.

In a preferred embodiment, the crystal is arranged by means of a glue compound in a jig comprising a material porous to the glue. More particularly, the jig has a radius of curvature 2R and the active crystal surface has a radius of curvature R. It is possible to provide a planar crystal in the jig and then to grind the active surface to the desired curvature, whilst it is also possible to first provide the crystal with a curvature, which, after the crystal has been mounted in the jig, together with the curvature of the jig leads to the desired curvature. Further, the crystal can be coated on the non-active flat side with a layer of metal, which may be applied, for example, by vapour deposition, sputtering or spinning in a layer having a very homogeneous thickness. With this layer as a joining intermediate layer, the crystal may then be secured again in the jig, for example, by soldering or diffusion, which jig then need not be porous. Alternatively, the metal layer may be applied in the form of a metal foil; this is particularly favourable with the use of a crystal material which in itself is brittle or of low strength. With a metal foil of, for example, phosphor bronze, a very flexible element of high strengh can nevertheless be obtained. The back side of the crystal may also be formed so that the crystal ultimately has an at least substantially uniform thickness. The surface of the back side of the crystal should be very flat because irregularities therein can adversely affect the operation of the crystal.

In a further embodiment, the crystal consists of a single crystal of silicon or germanium poor in dislocations, which, when mounted in the jig, is only elastically deformed. The single crystal is then, for example, a slice cut along a crystal surface. After the spherical deformation, a centre of curvature of the said crystal surface lies on a Rowland sphere on which with a close approximation will be located also the centres of curvatures of some further crystal surfaces with decreasing crystal surface distance. As a result, with a single crystal in a spectrometer the presence in a specimen to be analysed of elements having an atomic number between 15 and 40 can be demonstrated by means of, for example, Rα radiation, whilst by means of Lα radiation the presence of elements having a higher atomic number therein can be demonstrated.

In a preferred embodiment according to the invention, the crystal acts as a monochromator in an X-ray analysis apparatus, whereby now for a complete analysis a fixed position of the specimen and two positions of the analysis crystal and a single scanning along the arc of a circle of the detector will be sufficient. In this case, the resolution and the signal-to-noise ratio can also be materially improved.

The crystal according to the invention can further be used successfully in, for example, a diffractometer in which, for example, use is made of a converging Cu-Kα 1 radiation boom, and in apparatus for stress examination or texture measurements.

A few preferred embodiments according to the invention will now be described more fully with reference to the drawing. In the drawing:

Figure 1 shows a crystal according to the invention as a part of a sphere on which the location of centres of curvature for distinct crystal surface is indicated.

Fig. 2 shows a crystal according to the invention at different stages of manufacture,

Figures 3a and 3b show examples of the radiation path in an X-ray analysis apparatus provided with a silicon single crystal according to the invention,

Figure 4 shows an outline of a powder diffraction apparatus provided with such a crystal, and

Figure 5 shows an outline of an apparatus for stress examination in materials provided with such a crystal.

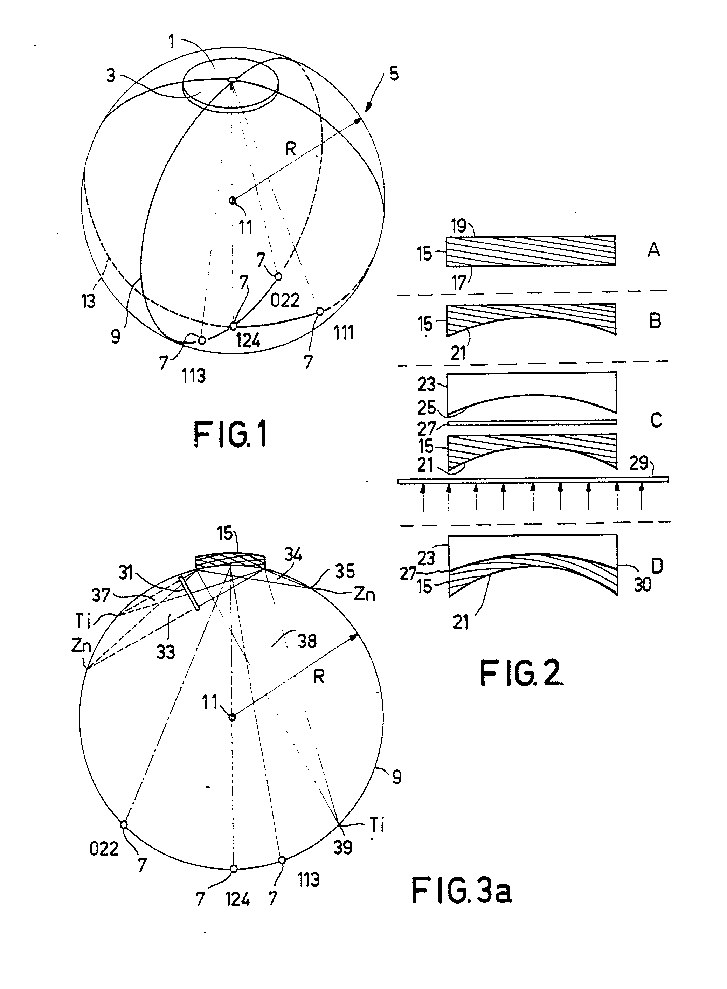

Figure 1 shows a silicon single crystal 1 of which an active surface 3 forms part of a sphere 5 on which centres of curvature 7 of distinct crystal surfaces are located. In the Figure, the centres of curvature for crystal surfaces (124), (113), (022) and (111) for a crystal formed from a slice of material parallel to the (124) crystal surfaces thereof are indicated as such in this configuration, the exact centre of curvature for the crystal surfaces (124) is located on the surface of the sphere and for other groups of crystal surfaces approximate centres of curvature are located on the surface of the sphere. The sphere 5, also designated as Rowland sphere, is determined by the position and the radius of curvature of the crystal and the (124) centre of curvature. *Inter alia* the centres of curvature mentioned below are located at least substantially on the surface of the sphere in such a manner that the centres of curvature for the crystal surface (113) and (022) are located with the centre of curvature for the crystal surface (124) on the circle circumference of the circle 9 passing through the centre 11 of the sphere 5, while the centre of curvature for the crystal surface (111) is located with the centre of curvature (124) on a circle circumference of a circle 13 orientated at right angles thereto and passing through the centre 11.

Such a crystal is formed by means of a method to be described in Figure 2, in which the starting material is a slice 15 of monocrystalline silicon poor in dislocations shown in Figure 2a. Parallel surfaces 17 and 19 of the crystal extend (in this case) parallel to the (124) crystal surfaces, while in the crystal the crystal surfaces (022) and (113) are indicated diagrammatically. At the surface 17, the crystal is then excavated, for example, by grinding, until a spherical surface 21 having a radius of curvature 2R and shown in Figure 2B is obtained.

A jig 23 shown in Figure 2C and formed in this case from a porous material is correspondingly excavated on one side until a spherical surface 25 is obtained which, for example, also has a radius of curvature 2R. With the interposition of a glue foil 27, the ground crystal 15 is then pressed into the jig. For this purpose, use is made here of a diaphragm 29 which is pressed by means of gas or liquid pressure against the crystal surface 21 in such a manner that it is loaded at least substantially homogeneously. In this process, it is recommendable for obtaining a good adherence to heat the assembly to, for example, 180°C and to eliminate the pressure only after cooling. The temperature can be adapted to the glue and the excess quantity of glue is absorbed by the porous jig. A combination 30 of crystal and jig thus formed and shown in Figure 2D constitutes a robust element to be readily manipulated for X-ray analysis apparatus suiting the purpose. The active surface 21 of the crystal has by a combination of treatments a radius of curvature R which corresponds to that of the sphere 5 in Figure 1.

It will be appreciated that other methods of forming the combination 30 may also be used. However, it is required to mount the crystal with adherence at least along its whole circumference and preferably throughout the whole non-active surface 19. As a result, the possibility of later deformation is strongly reduced. As already indicated, the crystal may alternatively be mounted in the jig by soldering with the interposition of a metal layer, whereby irregularities in the layer thickness of the soldering material have to be avoided.

Figure 3 shows the radiation path in an X-ray apparatus for analysing a specimen 31 by means of a silicon single crystal 15 thus formed. Figure 3a shows the circle 9 of Figure 1 with the centre of curvature (022), (124) and (113), while Figure 3b shows the circle 13 of Figure 1 with the centres of curvatures (124) and (111). Viewed from the apparatus, the difference between Figure 3a and Figure 3b is a rotation of the crystal 15 through 90° about an axis passing through the centre of curvature (124). In dependence upon the wavelength, of X-ray radiation produced in the specimen a conical beam trapped by the crystal is focused by the crystal in a line on the circle circumference. The cone is determined by the solid angle viewed from the point of intersection of a Bragg condition applying to the relevant crystal surface and the circumference of the crystal. Thus, for example, in Figure 3a, for the element zinc a cone 33 is trapped by the crystal, of which radiation of the wavelength applying to the relevant crystal surfaces, in this case the (113) surfaces, is focused as a conical beam 34 in a line 35 located on the circle 9. By means of a detector to be arranged there, the intensity and hence the zinc content in the specimen can be measured. Likewise, radiation of a wavelength characteristic of titanium from a cone 37 is concentrated by (022) crystal surfaces in the crystal via a conical beam 38 to a line 39 on the circle. In Figure 3b, there is indicated by way of example how after rotation of the crystal the radiation characteristic of the element phosphorus from the cone 41 is concentrated by (111) crystal surfaces in a conical beam 42 to a line 43 along the circumference of the circle 13. Thus, all the elements having an atomic number larger than about 15 can be analysed with one of the two positions of the crystal. Use is then made of diffraction at the (113), (022) and (111) crystal surfaces of the crystal. For the elements having a comparatively low atomic number, use is then made, for example, of Kα1 radiation, whilst for the elements having a high atomic number Lα1 radiation is used. Thus, the focus lines for, for example, Ca(20) to Co(27) of Kα1 radiation diffracted at the (022) crystal surfaces are located on either side of the point 39, which also applies to the focus lines for, for example, Sn(51) to Tm(69) of Lα1 radiation also diffracted at the (22) crystal surfaces of the crystal.

On either side of the focus point 35, there can be correspondingly measured for Ni(28) to Zr(40) with Kα1 radiation at the (113) crystal surfaces and for Yb(70) to U(92) with Lα1 radiation at the (113) crystal surfaces. The arrangement is then chosen so that no overlap of the focus lines occurs. If nevertheless such an overlap should occur, there can be discriminated between elements by, for example, a second measurement with another wavelength for the X-ray radiation, for example, Kβ for one of the elements.

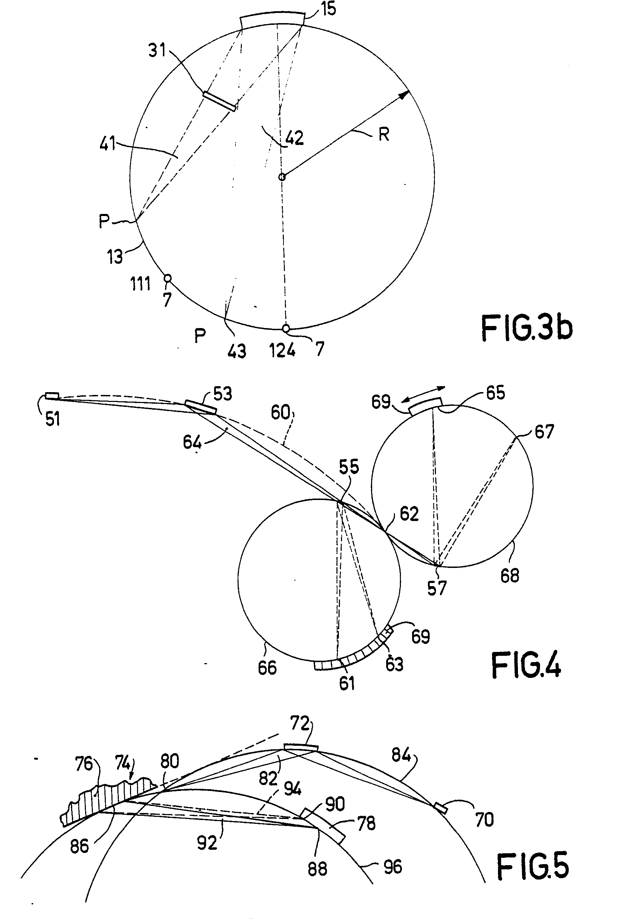

A powder diffractometer according to the invention, for which Figure 4 outlines the radiation path, shows a radiation source 51, for example, the target of an anode in an X-ray tube, a spherically curved single crystal 53, a specimen 55 in transmission position and a specimen 57 in reflection position. The source 51 and the crystal 53 are located on a Rowland sphere 60, on which a focus 62 of an X-ray beam 64 focused by the crystal is also located. The X-ray radiation is, for example, copper Kα1 radiation. In an arrangement of the kind shown here, radiation diffracted at distinct crystal surfaces of the specimen 55 is focused by transmission in distinct focus lines 61 and 63 of the circumference of a focus sphere 66. For reflection, radiation diffracted at distinct crystal surfaces of the specimen is focussed in focus lines 65 and 67 on the circumference of a focus sphere 68. With detectors 69 moving along these spheres or with position-sensitive detectors mounted along these spheres, the local intensity may now again be measured simultaneously for transmission and reflection. The specimen can be displaced within the beam path through a distance equal to twice the diameter of the sphere 66 in a correct angular relationship.

An X-ray analysis apparatus designed for measuring macro-stresses in, for example, work pieces provided with a crystal according to the invention, comprises, as shown in Figure 5, an X-ray source 70, a spherical analysis crystal 72, a specimen 74 with, for example crystal surfaces 76 and a, for example, position-sensitive detector 78 by which the radiation intensity can be measured as a function of the deflection angle. The source 70, the crystal 72 and the beam focus 80 of an X-ray beam 82 are located on a Rowland sphere 84. Similarly, the beam focus 80, an irradiated specimen surface 86 and a focus line 88 of a diffracted beam 92 are located on a Rowland sphere 96. The focus line 88 applying to, for example, a specimen or a direction in a specimen in which no macro-stresses are present, shifts to a focus line 90 for a specimen or a direction in a specimen in which macro-stresses are present. The arc distance between the focus line 88 and the focus line 90 is a measure for the value of the macro-stresses in the specimen measured in a given crystal direction. This value can be measured by exchange of specimens, whereby, for example, in order to determine the position of the focus line 88, first a stress-free specimen is measured and then specimens with unknown macro-stresses are measured. Further, a specimen can be rotated before the measurement, whereby either by an additional measurement or by an iteration process the position of a focus line of a stress-free measurment can be determined with the measurement results.

**Claims**

1. A double focusing X-ray analysis crystal for monochromatization and focusing of X-ray radiation in an X-ray analysis apparatus comprising

a single crystal slice (15) having a first surface (19) and a second opposite surface (21) with a first spherical shape, characterized by

a jig (23) having a surface (25) with a second spherical shape, and

means for joining said first surface (19) of said single crystal slice to said surface (25) of said jig, said first surface of said single crystal slice adopting said second spherical shape when being joined to the said jig.

2. A double focusing crystal according to claim 1, wherein said means for joining includes a glue compound contacting said first surface of said single crystal slice and said surface with said second shape of said jig, said jig having glue absorbing properties.

3. A double focusing crystal according to claim 1, wherein said means for joining includes a metal layer provided on said single crystal, said metal layer having an accurately defined thickness.

4. A double focusing crystal according to claim 1, claim 2 or claim 3, wherein said surface of said jig with said second spherical shape has a radius of curvature approximately equal to twice the radius of curvature of said second opposite surface with said spherical shape of said single crystal.

5. A double focusing crystal according to claim 1, claim 2 or claim 3, wherein said single crystal slice is one of silicon or germanium, said single crystal being substantially free of dislocations, and said single crystal slice having parallel end faces coinciding with (124) crystal surfaces.

6. A double focusing crystal according to claim 1, claim 2 or claim 3, wherein said single crystal slice has at least a substantially homogeneous thickness.

7. An X-ray diffractometer comprising an X-ray source, a monochromator, a specimen and a detector, said monochromator comprising a double focusing analysis crystal according to claim 1.

8. An X-ray spectrometer comprising an X-ray source, a specimen, an analyzing crystal, and a detector, said analyzing crystal comprising a double focusing crystal according to claim 1.

9. An X-ray analysis apparatus for measuring macro-stresses in materials comprising an X-ray source, a spherical analysis crystal, a specimen, and a detector, said spherical analysis crystal comprising a double focusing crystal according to claim 1.

**Patentansprüche**

1. Doppelfokussierender Röntgenanalysekristall für Monochromatisierung und Fokussierung von Röntgenstrahlung in einem Röntgenanalysegerät, mit einer Einkristallscheibe (15) mit einer ersten Oberfläche (19) und einer gegenüberliegenden zweiten Oberfläche (21) mit einer ersten sphärischen Form, dadurch gekennzeichnet, dass eine Lehre (23) mit einer Oberfläche (25) mit einer zweiten sphärischen Form, und Mittel zur Verbindung der ersten Oberfläche (19) der erwähnten Einkristallscheibe mit der Oberfläche (25) der erwähnten Lehre vorgesehen sind, wobei die erste Oberfläche der Einkristallscheibe die zweite sphärische Form annimmt, wenn sie mit der Lehre verbunden wird.

2. Doppelfokussierender Kristall nach Anspruch 1, dadurch gekennzeichnet, dass die Verbindungsmittel eine Leimverbindung enthält, die die erste Oberfläche der Einkristallscheibe und die Oberfläche mit der erwähnten zweiten Form der Lehre in Kontakt bringt, wobei diese Lehre Leimabsorptionseigenschaften hat.

3. Doppelfokussierender Kristall nach Anspruch 1, dadurch gekennzeichnet, dass die Verbindungsmittel eine Metallschicht mit einer genau definierten Dicke auf dem Einkristall enthält.

4. Doppelfokussierungskristall nach Anspruch 1, 2 oder 3, dadurch gekennzeichnet, dass die Oberfläche der Lehre mit der zweiten sphärischen Form einen Krümmungsradius ungefähr gleich dem doppelten Krümmungsradius der zweiten gegenüberliegenden Oberfläche mit der genannten sphärischen Form des Einkristalls hat.

5. Doppelfokussierungskristall nach Anspruch 1, 2 oder 3, dadurch gekennzeichnet, dass die Einkristallscheibe aus Silikon oder Germanium besteht, dass der Einkristall im wesentlichen versetzungsfrei ist, und dass die Einkristallscheibe mit (124) Kristalloberflächen zusammenfallende paralle Stirnflächen besitzt.

6. Doppelfokussierungskristall nach Anspruch 1, 2 oder 3, dadurch gekennzeichnet, dass die Einkristallscheibe zumindest eine im wesentlichen homogene Dicke besitzt.

7. Röntgendiffraktometer mit einer Röntgenquelle, einem Monochromator, einer Probe und einem Detektor, wobei der Monochromator einen Doppelfokussierungsanalysekristall nach Anspruch 1 enthält.

8. Röntgenspektrometer mit einer Röntgenquelle, einer Probe, einem Analysekristall und einem Detektor, wobei der Analysekristall einen Doppelfokussierungskristall nach Anspruch 1 enthält.

9. Röntgenanalysegerät zur Messung von Makrospannungen in Werkstoffen mit Hilfe einer Röntgenquelle, eines sphärischen Analysekristalls, einer Probe und einem Detektor, wobei dieser sphärische Analysekristall einen Doppelfokussierungskristall nach Anspruch 1 enthält.

**Revendications**

1. Cristal d'analyse aux rayons X à double focalisation pour assurer la monochromatisation et la focalisation d'un rayonnement X dans un appareil d'analyse à rayons X comprenant:

une tranche de monocristal (15) comportant une première surface (19) et une seconde surface opposée (21) avec une première forme sphérique, caractérisé par

un gabarit (23) comportant une surface (25) avec une seconde forme sphérique, et

un dispositif pour joindre la première surface (19) de la tranche de monocristal à la surface (25) du gabarit, la première surface de la tranche de monocristal adoptant la seconde forme sphérique lorsqu'elle est jointe au dit gabarit.

2. Cristal à double focalisation suivant la revendication 1, dans lequel le dispositif de jonction comprend une colle en contact avec la première surface de la tranche de monocristal et la dite surface présentant la seconde forme du gabarit, le gabarit présentant des propriétés d'absorption de la colle.

3. Cristal à double focalisation suivant la revendication 1, dans lequel le dispositif de jonction comprend une couche de métal prévue sur le monocristal la couche de métal ayant une épaisseur définie avec précision.

4. Cristal à double focalisation suivant la revendication 1, 2 ou 3, dans lequel la surface du gabarit avec la seconde forme sphérique a un rayon de courbure approximativement égal au double du rayon de courbure de la second surface opposée avec la forme sphérique du monocristal.

5. Cristal à double focalisation suivant la revendication 1, 2 ou 3, dans lequel la tranche de monocristal est un silicium ou en germanium, le monocristal étant en substance dépourvu de dislocations, et la trance de monocristal comportant des surfaces d'extrémité parallèles coïncidant avec des faces cristallines (124).

6. Cristal à double focalisation suivant la revendication 1, 2 ou 3, dans lequel la tranche de monocristal a au moins une épassieur en substance homogène.

7. Diffractomètre à rayons X comprenant une source de rayons X, un monochromateur, une éprouvette et un détecteur, le monochromateur comprenant un cristal d'analyse à double focalisation suivant la revendication 1.

8. Spectromètre à rayons X comprenant une source de rayons X, une éprouvette, un cristal d'analyse et un détecteur, le cristal d'analyse comprenant un cristal à double focalisation suivant la revendication 1.

9. Appareil d'analyse aux rayons X pour mesurer des macrocontraintes dans des matériaux comprenant une source de rayons X, un cristal d'analyse sphérique, une éprouvette et un détecteur, le cristal d'analyse sphérique comprenant un cristal à double focalisation suivant la revendication 1.

FIG.1

FIG.2

FIG.3a

FIG.3b

FIG.4

FIG.5